(19)

Europäisches
Patentamt

European
Patent Office

Office européen
des brevets

(11)　**EP 4 657 945 A1**

(12)　**EUROPEAN PATENT APPLICATION**
published in accordance with Art. 153(4) EPC

(43) Date of publication:
　　03.12.2025　Bulletin 2025/49

(21) Application number: 23934636.4

(22) Date of filing: 28.04.2023

(51) International Patent Classification (IPC):
　　*H04W 72/0453* (2023.01)　　*H04W 72/12* (2023.01)

(52) Cooperative Patent Classification (CPC):
　　**H04W 72/0453; H04W 72/12**

(86) International application number:
　　**PCT/CN2023/091760**

(87) International publication number:
　　**WO 2024/221444 (31.10.2024 Gazette 2024/44)**

(84) Designated Contracting States:
　　**AL AT BE BG CH CY CZ DE DK EE ES FI FR GB
　　GR HR HU IE IS IT LI LT LU LV MC ME MK MT NL
　　NO PL PT RO RS SE SI SK SM TR**
　　Designated Extension States:
　　**BA**
　　Designated Validation States:
　　**KH MA MD TN**

(71) Applicant: **GUANGDONG OPPO MOBILE
　　TELECOMMUNICATIONS
　　CORP., LTD.
　　Dongguan, Guangdong 523860 (CN)**

(72) Inventors:
　　• XU, Jing
　　　**Dongguan, Guangdong 523860 (CN)**
　　• ZHANG, Yi
　　　**Dongguan, Guangdong 523860 (CN)**

(74) Representative: **Taor, Simon Edward William et al
　　Venner Shipley LLP
　　200 Aldersgate
　　London EC1A 4HD (GB)**

(54)　**RESOURCE INDICATION METHOD, TERMINAL DEVICE, AND NETWORK DEVICE**

(57)　The disclosure relates to a resource indication method, a terminal device, a network device, a chip, a computer-readable storage medium, a computer program product, and a computer program. The resource indication method includes the following. A terminal device receives first indication information, where the first indication information indicates a target frequency-domain resource in a first subband. The terminal device parses the first indication information based on a first resource block group (RBG) size to determine the target frequency-domain resource. According to embodiments of the disclosure, flexible indication of frequency-domain resources in the first subband can be realized.

S301

RECEIVE, BY TERMINAL DEVICE, FIRST INDICATION
INFORMATION, WHERE FIRST INDICATION INFORMATION
INDICATES TARGET FREQUENCY-DOMAIN RESOURCE IN FIRST
SUBBAND

S302

PARSE, BY TERMINAL DEVICE, FIRST INDICATION INFORMATION
BASED ON FIRST RBG SIZE, TO DETERMINE TARGET
FREQUENCY-DOMAIN RESOURCE

**FIG. 3**

**EP 4 657 945 A1**

**Description**

TECHNICAL FIELD

The disclosure relates to the field of communication, and more particularly, to a resource indication method, a terminal device, a network device, a chip, a computer-readable storage medium, a computer program product, and a computer program.

BACKGROUND

At present, X-division duplex (XDD) technology is introduced in a communication system, that is, data sending and reception can be performed at the same time on different subbands in a same sub-frame. For example, a subband can be configured for uplink (UL) data transmission in a downlink (DL) slot. How to indicate a frequency-domain resource when XDD technology is introduced needs to be considered.

SUMMARY

A resource indication method is provided in embodiments of the disclosure. The method includes the following. A terminal device receives first indication information, where the first indication information indicates a target frequency-domain resource in a first subband. The terminal device parses the first indication information based on a first resource block group (RBG) size, to determine a target frequency-domain resource.

A resource indication method is provided in embodiments of the disclosure. The method includes the following. A network device sends first indication information, where the first indication information is determined based on a first RBG size, and the first indication information indicates a target frequency-domain resource in a first subband.

A terminal device is provided in embodiments of the disclosure. The terminal device includes a first communication module and a first processing module. The first communication module is configured to receive first indication information, where the first indication information indicates a target frequency-domain resource in a first subband. The first processing module is configured to parse the first indication information based on a first RBG size, to determine a target frequency-domain resource.

A network device is provided in embodiments of the disclosure. The network device includes a second communication module. The second communication module is configured to send first indication information, where the first indication information is determined based on a first RBG size, and the first indication information indicates a target frequency-domain resource in a first subband.

A terminal device is provided in embodiments of the disclosure. The terminal device includes a processor and a memory. The memory is configured to store computer programs, and the processor is configured to invoke and execute the computer programs stored in the memory, to cause the terminal device to perform the sidelink (SL) communication method described above.

A network device is provided in embodiments of the disclosure. The network device includes a processor and a memory. The memory is configured to store computer programs, and the processor is configured to invoke and execute the computer programs stored in the memory, to cause the network device to perform the resource indication method described above.

A chip is provided in embodiments of the disclosure. The chip is configured to implement the resource indication method described above. Specifically, the chip includes a processor. The processor is configured to invoke and execute computer programs from a memory, to cause a device equipped with the chip to perform the resource indication method described above.

A computer-readable storage medium is provided in embodiments of the disclosure. The computer-readable storage medium is configured to store computer programs which, when executed by a device, are operable with the device to perform the resource indication method described above.

A computer program product is provided in embodiments of the disclosure. The computer program product includes computer program instructions which are operable with a computer to perform the resource indication method described above.

A computer program is provided in embodiments of the disclosure. The computer program, when executed by a computer, is operable with the computer to perform the resource indication method described above.

In embodiments of the disclosure, the network device can use first indication information to indicate to the terminal device the target frequency-domain resource in the first subband, and the terminal device parses the first indication information based on the first RBG size. In this way, flexible indication of frequency-domain resources in the first subband can be realized by using the first RBG size.

BRIEF DESCRIPTION OF THE DRAWINGS

FIG. 1 is a schematic diagram of a communication system according to embodiments of the disclosure.

FIG. 2 is a schematic diagram illustrating an exemplary application scenario according to embodiments of the disclosure.

FIG. 3 is a schematic flowchart of a resource indication method according to an embodiment of the disclosure.

FIG. 4 is a schematic flowchart of a resource indication method according to another embodiment of the disclosure.

FIG. 5 is a schematic block diagram of a terminal device according to an embodiment of the disclosure.

FIG. 6 is a schematic block diagram of a network device according to an embodiment of the disclosure.

FIG. 7 is a schematic block diagram of a network device according to another embodiment of the disclosure.

FIG. 8 is a schematic block diagram of a network device according to another embodiment of the disclosure.

FIG. 9 is a schematic block diagram of a network device according to another embodiment of the disclosure.

FIG. 10 is a schematic block diagram of a communication device according to embodiments of the disclosure.

FIG. 11 is a schematic block diagram of a chip according to embodiments of the disclosure.

FIG. 12 is a schematic block diagram of a communication system according to embodiments of the disclosure.

DETAILED DESCRIPTION

The following will describe technical solutions of embodiments of the disclosure with reference to the accompanying drawings in embodiments of the disclosure.

The technical solutions of embodiments of the disclosure are applicable to various communication systems, for example, a Global System of Mobile communication (GSM) system, a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi), a 5th-generation (5G) communication system, a beyond 5G (B5G) communication system, a 6th-generation communication (6G) communication system, or other communication systems, etc.

Generally speaking, a conventional communication system generally supports a limited quantity of connections and therefore is easy to implement. However, with development of communication technology, a mobile communication system will not only support conventional communication but also support, for example, terminal-to-terminal direct communication such as device to device (D2D) communication, machine to machine (M2M) communication, machine type communication (MTC), vehicle to vehicle (V2V) communication, or vehicle to everything (V2X) communication, etc. Embodiments of the disclosure can also be applied to these communication systems.

In an implementation, the communication system in embodiments of the disclosure can be applied to a carrier aggregation (CA) scenario, or can be applied to a dual connectivity (DC) scenario, or can be applied to a standalone (SA) network deployment scenario.

In an implementation, the communication system in embodiments of the disclosure is applicable to an unlicensed spectrum, and an unlicensed spectrum can be regarded as a shared spectrum. Alternatively, the communication system in embodiments of the disclosure is applicable to a licensed spectrum, and a licensed spectrum can be regarded as a non-shared spectrum.

Various embodiments of the disclosure are described in connection with a network device and a terminal device. The terminal device can also be referred to as a user equipment (UE), an access terminal, a subscriber unit, a subscriber station, a mobile station, a remote station, a remote terminal, a mobile device, a user terminal, a terminal, a wireless communication device, a user agent, or a user device, etc.

The terminal device can be a station (ST) in a WLAN, a cellular radio telephone, a cordless telephone, a session initiation protocol (SIP) telephone, a wireless local loop (WLL) station, a personal digital assistant (PDA), a handheld device or a computing device with wireless communication functions, other processing devices coupled with a wireless modem, an in-vehicle device, a wearable device, and a terminal device in a next-generation communication system, for example, a terminal device in an NR network, or a terminal device in a future evolved public land mobile network (PLMN), etc.

In embodiments of the disclosure, the terminal device can be deployed on land, which includes indoor or outdoor, handheld, wearable, or in-vehicle. The terminal device can also be deployed on water (such as ships, etc.) or under water (such as submarines). The terminal device can also be deployed in the air (such as airplanes, balloons, satellites, etc.).

In embodiments of the disclosure, the terminal device can be a mobile phone, a pad, a computer with wireless transceiver functions, a virtual reality (VR) terminal device, an augmented reality (AR) terminal device, a terminal device in personal internet of things (PIoT), a wireless terminal device in industrial control, a wireless terminal device in self driving, a wireless terminal device in remote medicine, a wireless terminal device in smart grid, a wireless terminal device in transportation safety, a wireless terminal device in smart city, or a wireless terminal device in smart home, etc.

By way of explanation rather than limitation, in embodiments of the disclosure, the terminal device can also be a wearable device. The wearable device can also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In embodiments of the disclosure, the network device can be a device configured to communicate with a mobile device, and the network device can be an access point (AP) in a WLAN, a base transceiver station (BTS) in GSM or CDMA, a Node B (NB) in WCDMA, or can be an evolutional Node B (eNB or eNodeB) in LTE, or a relay station or AP, or an in-vehicle device, a wearable device, a network device (gNB) in an NR network, a network device in a future evolved PLMN, or a network device in an NTN, etc.

By way of explanation rather than limitation, in embodiments of the disclosure, the network device can be mobile. For example, the network device can be a mobile device. Optionally, the network device can be a satellite or a balloon base station. For example, the satellite can be a low earth orbit (LEO) satellite, a medium earth orbit (MEO) satellite, a geostationary earth orbit (GEO) satellite, a high elliptical orbit (HEO) satellite, etc. Optionally, the network device can also be a base station deployed on land or water.

In embodiments of the disclosure, the network device serves a cell, and the terminal device communicates with the network device on a transmission resource (for example, a frequency-domain resource or a spectrum resource) for the cell. The cell can be a cell corresponding to the network device (for example, a base station). The cell can belong to a macro base station, or can belong to a base station corresponding to a small cell. The small cell can include: a metro cell, a micro cell, a pico cell, a femto cell, and the like. These small cells are characterized by small coverage and low transmission power and are adapted to provide data transmission service with high-rate.

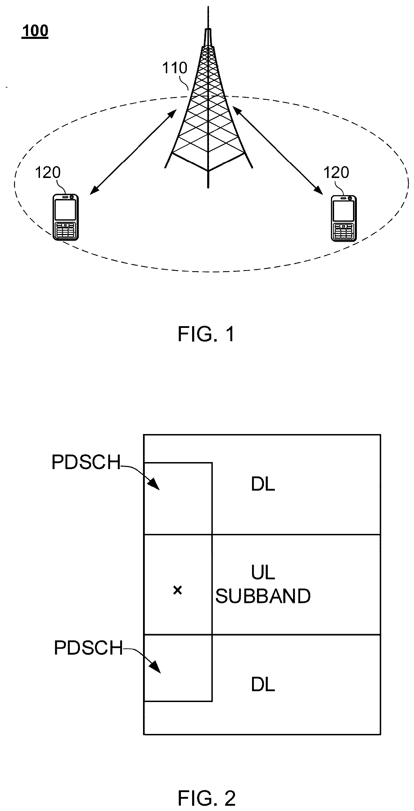

FIG. 1 exemplarily illustrates a communication system 100. The communication system 100 includes one network device 110 and two terminal devices 120. In a possible implementation, the communication system 100 can include multiple network devices 110, and there can be other quantities of terminal devices 120 in a coverage area of each of the network devices 110. Embodiments of the disclosure are not limited in this regard.

In a possible implementation, the communication system 100 can further include a mobility management entity (MME), an access and mobility management function (AMF), and other network entities, which is not limited in embodiments of the disclosure.

It should be understood that, in embodiments of the disclosure, a device with communication functions in a network/system can be referred to as a "communication device". Taking the communication system illustrated in FIG. 1 as an example, the communication device may include the network device and the terminal device(s) that have communication functions. The network device and the terminal device(s) can be the devices in embodiments of the disclosure and will not be elaborated again herein. The communication device may further include other devices such as a network controller, aN MME, or other network entities in the communication system, and embodiments of the disclosure are not limited in this regard.

It should be understood that, the terms "system" and "network" herein are usually used interchangeably throughout this disclosure. The term "and/or" herein only describes an association relationship between associated objects, which means that there can be three relationships. For example, *A* and/or *B* can mean *A* alone, both *A* and *B* exist, and *B* alone. In addition, the character "/" herein generally indicates that the associated objects are in an "or" relationship.

It should be understood that, "indication" referred to in embodiments of the disclosure can be a direct indication, can be an indirect indication, or can mean that there is an association relationship. For example, *A* indicates *B* can mean that *A* directly indicates *B,* for instance, *B* can be obtained according to *A; can* mean that *A* indirectly indicates *B,* for instance, *A* indicates *C,* and *B* can be obtained according to *C;* or can mean that that there is an association relationship between *A* and *B.*

In the elaboration of embodiments of the disclosure, the term "correspondence" can mean that there is a direct or indirect correspondence between the two, can mean that there is an association between the two, or can mean a relationship of indicating and indicated or configuring and configured, etc.

In order to facilitate understanding of technical solutions of embodiments of the disclosure, the following will describe the related art of embodiments of the disclosure. The following related art as an optional solution can be arbitrarily combined with the technical solutions of embodiments of the disclosure, which shall all belong to the protection scope of embodiments of the disclosure.

(I) Uplink (UL) subband in downlink (DL) symbol/slot

In cross-division duplex (XDD) technology, data sending and reception can be performed at the same time on different subbands in the same sub-frame. XDD can also be referred to as subband non-overlapping full duplex (SBFD). XDD technology is mainly applied to a base-station side, while a terminal side still maintains the current operation, that is, only one of data sending or reception is supported within one subframe. FIG. 2 is a schematic diagram illustrating an exemplary application scenario of XDD technology. As illustrated in FIG. 2, a subband in the middle of a DL slot is configured as an UL subband. If a terminal is configured/indicated to receive data in the DL slot, such as a physical downlink shared channel (PDSCH), for a part where the PDSCH overlaps with the UL subband, since the base-station side is in a receive (Rx) state and is unable to send data on this subband, the base station sends the PDSCH only on DL resources at two sides of the subband. If the terminal is configured/indicated to send data in the DL slot, such as a physical uplink shared channel (PUSCH), the PUSCH can be sent only on the UL subband.

(II) Method for frequency-domain resource indication

There are two methods for frequency-domain resource indication for a PDSCH/PUSCH.

1. DL resource allocation type 0

In type 0, a frequency-domain resource information field, i. e., resource block (RB) assignment information, includes a bitmap, and the bitmap indicates an RB group(s) (RBG) allocated to a UE. An RBG is a set of consecutive physical RBs (PRBs)/virtual RBs (VRBs). An RBG size (*P*) is determined according to a higher-layer parameter, and has different values with regard to different bandwidth parts (BWPs) and configurations, which are specifically illustrated in Table 1 below.

Table 1

| BWP size (RB number) | RBG size (RB number) | |
|---|---|---|
| | Configuration 1 | Configuration 2 |
| 1~36 | 2 | 4 |
| 37~72 | 4 | 8 |
| 73~144 | 8 | 16 |
| 145~275 | 16 | 16 |

For example, when the BWP size (that is, the bandwidth of a BWP) is 100 RBs, if the RBG configuration is configuration 1, then the RBG size is 8; and if the RBG configuration is configuration 2, the RBG size is 16.

For DL BWP *i* with $N_{BWP,i}^{size}$ RBs (i is an index of the BWP), if the total number of RBGs is represented by $N_{RBG}$, then:

$$N_{RBG} = \left\lceil \left( N_{BWP,i}^{size} + \left( N_{BWP,i}^{start} \bmod P \right) \right) / P \right\rceil ;$$

$N_{BWP,i}^{start}$ is a starting position of BWP *i*. mod represents a modulo operation, and can also be understood as a remainder operation. $\lceil \ \rceil$ represents rounding-up. In the $N_{RBG}$ RBGs of BWP *i*, the number of RBs in the 1st RBG (i. e. the size of the 1st RBG) is $RBG_0^{size} = P - N_{BWP,i}^{start} \bmod P$ . If $\left( N_{BWP,i}^{start} + N_{BWP,i}^{size} \right) \bmod P > 0$ , the size of the last RBG is

$$RBG_{last}^{size} = \left( N_{BWP,i}^{start} + N_{BWP,i}^{size} \right) \bmod P$$ ; otherwise, the size of the last RBG is P. The size of other RBGs is P.

The bitmap has $N_{RBG}$ bits (that is, there are $N_{RBG}$ bits in total), and each bit corresponds to one RBG. The RBGs are indexed in the order of increasing frequency and starting at the lowest frequency of a BWP. The order of an RBG bitmap is such that RBG 0 to RBG $N_{RBG}$-1 are mapped from the most significant bit (MSB) to the least significant bit (LSB). If a certain RBG is allocated to the UE, a bit corresponding to the RBG has a value of 1, otherwise, the bit has a value of 0.

2. DL resource allocation type 1

In type 1, a frequency-domain resource information field indicates to the terminal a set of contiguously allocated VRBs. VRB-to-PRB mapping can be interleaved or non-interleaved. These VRBs are within an active BWP.
For type 1, the frequency-domain resource information field consists of a resource indication value (RIV), and the RIV is obtained according to a starting VRB index RB$_{start}$ and the length L$_{RBs}$ in terms of contiguously allocated RBs based on the following formula:

$$\text{if } \left( L_{RBs} - 1 \right) \leq \left\lfloor N_{BWP}^{size}/2 \right\rfloor, \text{ then}$$

$$RIV = N_{BWP}^{size} \left( L_{RBs} - 1 \right) + RB_{start};$$

$$\text{otherwise,}$$

$$RIV = N_{BWP}^{size} \left( N_{BWP}^{size} - L_{RBs} + 1 \right) + \left( N_{BWP}^{size} - 1 - RB_{start} \right).$$

$\lfloor \ \rfloor$ represents rounding-down. The calculated RIV value are converted into multiple bits, which is the content of an RIV field.
After an UL subband is introduced, since an available UL bandwidth is much smaller than a bandwidth configured for a BWP, in frequency-domain resource indication, effective bits can be determined according to an UL subband bandwidth. Specifically, the number of available RBs and an RBG size can be determined according to the UL subband bandwidth, which reduces effective bit overhead of frequency-domain resource indication and/or improves scheduling accuracy, thereby improving transmission performance or efficiency. In some cases, the number of effective bits of a frequency-domain resource indicator field determined according to a subband may be greater than the size of a frequency-domain resource indicator field in downlink control information (DCI) (generally, the size of the frequency-domain resource indicator field in DCI is determined based on a BWP). As illustrated in Table 2, the number of effective bits determined based on different UL subband bandwidths are different. For a system with an UL BWP of 100 RBs, the number of bits in a frequency-domain resource indicator field determined based on the UL BWP is 13. According to Table 2, the number of effective bits of the frequency-domain resource indicator field determined based on the UL subband bandwidth will sometimes exceed 13.

Table 2

| UL subband bandwidth (RB number) | RBG size (RB number) | Effective bits |
|---|---|---|
| 90 | 8 | 12 |
| 80 | 8 | 10 |
| 70 | 4 | 18 |
| 60 | 4 | 15 |
| 50 | 4 | 13 |
| 40 | 4 | 10 |
| 30 | 2 | 15 |

(continued)

| UL subband bandwidth (RB number) | RBG size (RB number) | Effective bits |
|---|---|---|
| 20 | 2 | 10 |
| 10 | 2 | 5 |

As can be seen, after an UL subband is introduced, how to indicate frequency-domain resource information needs to be taken into account. The technical solutions provided in embodiments of the disclosure are intended for solving at least one of the above technical problems.

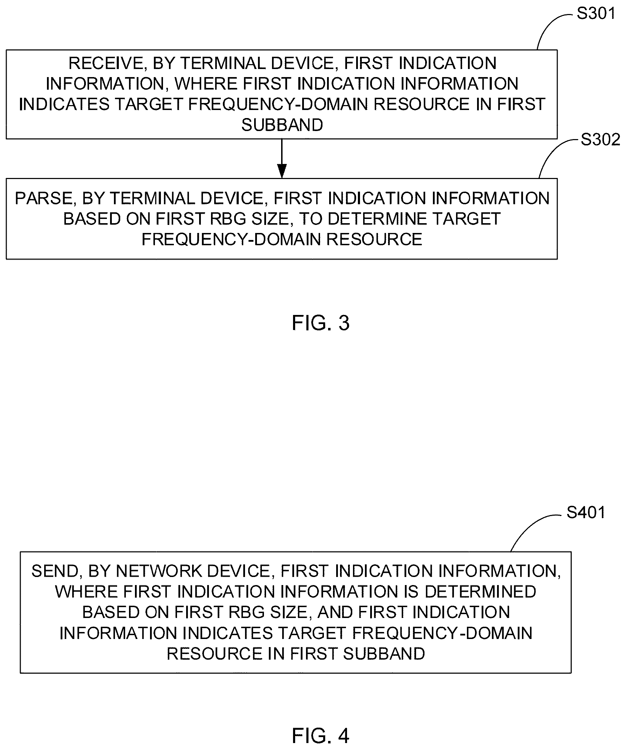

FIG. 3 is a schematic flowchart of a resource indication method according to an embodiment of the disclosure. The method can be applied to the system illustrated in FIG. 1, but is not limited thereto. The method includes all or some of the following content.

S301, a terminal device receives first indication information, where the first indication information indicates a target frequency-domain resource in a first subband.

S302, the terminal device parses the first indication information based on a first RBG size to determine the target frequency-domain resource.

In some embodiments, the first indication information can be dynamic signaling or can be carried in dynamic signaling, where the dynamic signaling includes DCI.

In some embodiments, the first subband can be a subband based on XDD technology. For example, the first subband can be an UL subband in a DL time-domain resource, or an UL subband in a flexible time-domain resource, or a DL subband in an UL time-domain resource, or a DL subband in a flexible time-domain resource. The flexible time-domain resource can be further configured as an UL time-domain resource or a DL time-domain resource. In some embodiments, after a time-domain resource is configured as a flexible time-domain resource, the terminal device can use the time-domain resource for UL communication or DL communication according to a configuration or indication from a network device.

In some embodiments, the target frequency-domain resource is in a BWP and is used for the terminal device to perform data transmission. Here, data transmission can include data sending or data reception. The target frequency-domain resource can be a frequency-domain resource configured for the terminal device by the network device, that is, a frequency-domain resource which is scheduled for data transmission of the terminal device by the network device, that is, the first indication information can be sent by the terminal device.

It can be understood that, if the first subband is an UL subband, the target frequency-domain resource is used for the terminal device for data sending. If the first subband is a DL subband, the target frequency-domain resource is used for the terminal device for data reception.

In some embodiments, the first indication information can include a frequency-domain resource indicator field, where the frequency-domain resource indicator field can indicate the target frequency-domain resource via a bitmap. In some embodiments, the target frequency-domain resource can be indicated via a bitmap in type 0.

In some embodiments, the number of bits in the frequency-domain resource indicator field in the first indication information can be determined based on a BWP bandwidth and/or RBG configuration information.

In some embodiments, the number of bits in the frequency-domain resource indicator field refers to the number of bits included in the frequency-domain resource indicator field or the number of bits occupied by the resource indicator field. That is, if the frequency-domain resource indicator field has $M$ bits, the number of bits is $M$. In practice, the number of bits is the number of bits used to indicate whether an RBG(s) is the target frequency-domain resource. In some embodiments, each of the $M$ bits indicates whether an RBG corresponding to the bit is the target frequency-domain resource, where the $M$ bits do not include a bit for distinguishing a resource indication type (type 0 or type 1).

In some embodiments, the RBG configuration information can be a higher-layer parameter or determined based on a higher-layer parameter. For example, the RBG configuration information can include configuration 0 and configuration 1 illustrated in Table 1 above, which correspond to different RBG size configurations.

In an example, the number of bits in the frequency-domain resource indicator field can be determined based on the BWP bandwidth and the RBG configuration information. For example, a second RBG size can be determined based on the BWP bandwidth and the RBG configuration information, for example, the second RBG size is determined with reference to Table 1 above, then the number of RBGs in the BWP is determined based on the second RBG size, and the number of bits in the frequency-domain resource indicator field is determined based on the number of RBGs in the BWP.

It should be understood that, the above is only an example. In practice, the number of bits in the frequency-domain resource indicator field can also be determined based on the BWP bandwidth, or the number of bits in the frequency-domain resource indicator field can be determined based on the RBG configuration information, which can be implemented according to different application scenarios, or protocols, or system agreements.

In some embodiments, the first RBG size in the above step S302 is used to parse the first indication information, and accordingly, the first indication information can be encoded based on the first RBG size. In different situations, the first RBG size can be different from or the same as the second RBG size determined based on the BWP bandwidth.

In some embodiments, the first RBG size is determined based on at least one of: the RBG configuration information, the number of bits in the frequency-domain resource indicator field in the first indication information, the bandwidth of the first subband, or the BWP bandwidth.

In some embodiments, the first RBG size can be determined based on the bandwidth of the first subband. Since the bandwidth of the first subband is smaller than the BWP bandwidth, it is possible to reduce effective bit overhead of frequency-domain resource indication and/or improve scheduling accuracy, thereby improving transmission performance and efficiency.

In other embodiments, the first RBG size can be determined based on the bandwidth of the first subband and the number of bits in the frequency-domain resource indicator field in the first indication information, so as to adjust indication granularity and/or bit overhead of frequency-domain resource indication according to the first subband within the range of the number of bits in the frequency-domain resource indicator field.

In other embodiments, the first RBG size can be determined based on the RBG configuration information and the bandwidth of the first subband, so as to adjust indication accuracy and/or bit overhead of frequency-domain resource indication according to the first subband under a specific RBG configuration. The RBG configuration information can be indicated by a higher-layer parameter.

It can be understood that, in other embodiments, the first RBG size can also be determined according to the number of bits in the frequency-domain resource indicator field, or determined according to the number of bits in the frequency-domain resource indicator field and the RBG configuration information, etc., which can be set according to different application scenarios, protocols, or system agreements.

Regarding how to determine an RBG size used for parsing the first indication information, embodiments of the disclosure provide the following exemplary methods. It should be understood that, the following methods are not intended for limitation, and in practice, other methods can also be used to determine the RBG size used for parsing the first indication information.

Method 1:

The terminal device determines the first RBG size based on the bandwidth of the first subband and the RBG configuration information.

In some embodiments, the terminal device can look up a corresponding first RBG size from a first table based on the bandwidth of the first subband and the RBG configuration information, and use the first RBG size to parse the first indication information. The first table includes RBG sizes corresponding to multiple RBG configurations and multiple bandwidths, for example, can be set with reference to Table 3 below.

Table 3

| Bandwidth of first subband (RB number) | RBG size (RB number) | |
|---|---|---|
| | Configuration 1 | Configuration 2 |
| 1~36 | 2 | 4 |
| 37~72 | 4 | 8 |
| 73~144 | 8 | 16 |
| 145~275 | 16 | 16 |

Method 2:

In this method, the first RBG size is determined based on the bandwidth of the first subband, or can be determined based on the bandwidth of the first subband and the RBG configuration information. Different from Method 1, in this method, the first RBG size is used to parse the first indication information if the first RBG size satisfies a first condition.

Specifically, the terminal device parses the first indication information based on the first RBG size to determine the target frequency-domain resource as follows. If the first RBG size satisfies the first condition, the terminal device parses the first indication information based on the first RBG size to determine the target frequency-domain resource, where the first RBG size is determined based on the bandwidth of the first subband, and the first condition is related to the number of bits in the frequency-domain resource indicator field in the first indication information.

That is, in this method, the terminal device determines, based on the first condition related to the number of bits in the frequency-domain resource indicator field, whether to parse the first indication information based on the first RBG size.

As an example rather than limitation, determination of the first RBG size can be implemented with reference to Method 1.

In some embodiments, the first condition includes: the number of bits in the frequency-domain resource indicator field is greater than or equal to a first RBG number, where the first RBG number is determined based on the first RBG size and the bandwidth of the first subband. In some embodiments, the first RBG number can be the number of RBGs in the first subband determined based on the first RBG size.

In some embodiments, the resource indication method can further include the following. If the first RBG size does not satisfy the first condition, the terminal device parses the first indication information based on a second RBG size to determine the target frequency-domain resource, where the second RBG size is determined based on the BWP bandwidth. In some embodiments, the second RBG size can be determined based on the BWP bandwidth and the RBG configuration information.

That is, in this method, the RBG size used for parsing the first indication information can be the first RBG size determined based on the bandwidth of the first subband, or the second RBG size determined based on the BWP bandwidth, that is, the RBG size used for parsing the first indication information can be determined based on the bandwidth of the first subband or the BWP bandwidth.

In some embodiments, the number of bits in the frequency-domain resource indicator field can be preconfigured, or can be determined based on the BWP bandwidth and the RBG configuration information. In this case, if the first RBG size is determined based on the bandwidth of the first subband and the RBG configuration information, so as to determine the first RBG number based on the bandwidth of the first subband and the first RBG size, then the first RBG number may be different from the number of bits in the frequency-domain resource indicator field, that is, the number of RBGs in the first subband determined based on the first RBG size is different from the number of bits in the frequency-domain resource indicator field. If the number of bits in the frequency-domain resource indicator field is greater than or equal to the first RBG number, the frequency-domain resource indicator field can indicate whether each RBG in the first subband is the target frequency-domain resource. Accordingly, the network device can generate the first indication information by encoding based on first RBG size, and the terminal device can parse the first indication information based on the first RBG size. If the number of bits in the frequency-domain resource indicator field is less than the first RBG number, the frequency-domain resource indicator field is unable to indicate whether each RBG in the first subband is the target frequency-domain resource. Then the network device can generate the first indication information by encoding based on the second RBG size determined based on the BWP bandwidth, and the terminal device can parse the first indication information based on the second RBG size.

As can be seen, in Method 2, it is possible to adjust indication accuracy and/or bit overhead of frequency-domain resource indication according to the first subband within the range of the number of bits in the frequency-domain resource indicator field.

Method 3:

In this method, the first RBG size is determined based on the bandwidth of the first subband and the number of bits in the frequency-domain resource indicator field. Specifically, the resource indication method can further include the following. The terminal device determines a first RBG size that satisfies a second condition from a first set based on the bandwidth of the first subband and the number of bits in the frequency-domain resource indicator field in the first indication information.

The first set can include one or more RBG sizes.

In some embodiments, the first set can include all or some of RBG sizes specified in a communication system.

In some embodiments, the first set can be determined based on the RBG configuration information. In some embodiments, different sets for different RBG configuration information can be preconfigured, and the terminal device can determine the first set from multiple sets based on the current RBG configuration information. For example, RBG configuration 1 corresponds to set {2,4,8,16}, and RBG configuration 2 corresponds to set {4,8,16}. If the current RBG configuration is RBG configuration 1, then it can be determined that the first set is {2,4,8,16}.

In some embodiments, the second condition can include: the number of bits in the frequency-domain resource indicator field is greater than or equal to a second RBG number, where the second RBG number is determined based on the first RBG size and the bandwidth of the first subband. In some embodiments, the second RBG number can be the number of RBGs in the first subband determined based on the first RBG size.

In some embodiments, when determining the first RBG size from the first set, for each RBG size, whether the number of bits in the frequency-domain resource indicator field is greater than or equal to an RBG number determined based on the RBG size can be determined. If yes, the RBG size is the first RBG size satisfying the second condition; otherwise, the RBG size does not satisfy the second condition.

It can be understood that, the second condition can be similar to the first condition in Method 2, and is used for determining whether the frequency-domain resource indicator field can indicate each RBG in the first subband when the first RBG size is adopted.

In some embodiments, there can be multiple RBG sizes satisfying the second condition in the first set, and the first RBG size can be any one or a specific one in said multiple RBG sizes.

In some embodiments, the first RBG size can be a smallest RBG size that satisfies the second condition in the first set. That is, the terminal device can sequentially determine, in an ascending order of size, whether each RBG size in the first set satisfies the second condition, so as to select quickly the smallest RBG size satisfying the second condition and use the smallest RBG size as the first RBG size for parsing the first indication information. By selecting the smallest RBG size, indication accuracy can be improved under limited indication overhead.

As can be seen, in Method 3, it is also possible to adjust indication accuracy and/or bit overhead of frequency-domain resource indication according to the first subband within the range of the number of bits in the frequency-domain resource indicator field.

Method 4:

In this method, the first RBG size is determined based on the bandwidth of the first subband and the number of bits in the frequency-domain resource indicator field. That is, the resource indication method can further include the following. The terminal device obtains the first RBG size based on the bandwidth of the first subband and the number of bits in the frequency-domain resource indicator field in the first indication information.

In some embodiments, the terminal device can obtain the number of RBs corresponding to each bit in the frequency-domain resource indicator field by dividing the number of RBs in the first subband by the number of bits in the frequency-domain resource indicator field, where the number of RBs obtained is the first RBG size. In some embodiments, if the division result is not an integer, rounding-up can be performed to obtain the first RBG size.

As can be seen, in Method 4, it is also possible to adjust indication accuracy and/or bit overhead of frequency-domain resource indication according to the first subband within the range of the number of bits in the frequency-domain resource indicator field.

According to the foregoing exemplary methods, in embodiments of the disclosure, the RBG size corresponding to the first indication information can be determined flexibly, so that accuracy of frequency-domain resource indication can be controlled flexibly, which helps to take into consideration both indication overhead of frequency-domain resources and scheduling accuracy, thereby improving transmission performance and efficiency.

In some embodiments, the first indication information can include a bitmap corresponding to all or some RBGs in $K$ RBGs, and the $K$ RBGs are determined from the first subband based on the first RBG size, where $K$ is a positive integer. Accordingly, the terminal device can parse the first indication information based on the first RBG size to determine the target frequency-domain resource as follows. The terminal device determines $K$ RBGs from the first subband based on the first RBG size. The terminal device determines a bitmap from the first indication information, where the bitmap determined corresponds to all or some RBGs in the $K$ RBGs, and determines the target frequency-domain resource from the all or some RBGs based on the bitmap.

The all or some RBGs can be $K$ RBGs or M RBGs in the K RBGs, where $M \leq K$. That is, the terminal device can determine, from the first indication information, the bitmap corresponding to all or some RBGs in the $K$ RBGs as follows. The terminal device determines, from the first indication information, a bitmap corresponding to the $K$ RBGs, or the terminal device determines, from the first indication information, a bitmap corresponding to the $M$ RBGs.

As described above, in embodiments of the disclosure, the method for determining the RBG size corresponding to the first indication information can be adopted flexibly, and accordingly, there may be different cases. In embodiments of the disclosure, for different cases, different methods for bitmap setting and corresponding methods for parsing the first indication information can be adopted.

In some examples, the number of bits in the frequency-domain resource indicator field in the first indication information is always greater than or equal to the RBG number $K$ corresponding to the first RBG size. As such, $K$ consecutive bits in the indicator field can be used as a bitmap for frequency-domain resource indication.

That is, the bitmap can include $K$ consecutive bits corresponding to $K$ RBGs in the frequency-domain resource indicator field in the first indication information. Accordingly, the terminal device can determine, from the first indication information, the bitmap corresponding to all or some RBGs in the $K$ RBGs as follows. The terminal device determines a bitmap corresponding to the $K$ RBGs based on $K$ consecutive bits in the frequency-domain resource indicator field in the first indication information.

In some embodiments, the $K$ consecutive bits can be the last $K$ bits in the frequency-domain resource indicator field or the first $K$ bits in the frequency-domain resource indicator field. For example, information in the frequency-domain resource indicator field is "01101011". If $K$=6, the $K$ bits can be the first 6 bits "011010" or the last 6 bits "101011". Bits in the frequency-domain resource indicator field are sorted from the MSB to the LSB.

In other examples, the number of bits in the frequency-domain resource indicator field in the first indication information can be greater than or equal to the RBG number $K$ corresponding to the first RBG size. Based on this, $K$ consecutive bits in the indicator field can be set as a bitmap for frequency-domain resource indication if the number of bits in the frequency-domain resource indicator field is greater than or equal to the first RBG.

That is, if the number of bits in the frequency-domain resource indicator field in the first indication information is greater than or equal to $K$, the bitmap includes $K$ consecutive bits corresponding to $K$ RBGs in the frequency-domain resource indicator field in the first indication information. Accordingly, the terminal device can determine, from the first indication information, the bitmap corresponding to all or some RBGs in the $K$ RBGs as follows. If the number of bits in the frequency-domain resource indicator field in the first indication information is greater than or equal to $K$, the terminal device determines a bitmap corresponding to the $K$ RBGs based on $K$ consecutive bits in the frequency-domain resource indicator field.

In some embodiments, the $K$ consecutive bits can be the last $K$ bits in the frequency-domain resource indicator field or the first $K$ bits in the frequency-domain resource indicator field.

In some embodiments, bits in the frequency-domain resource indicator field other than the K bits indicate at least one of: virtual cyclic redundancy check (CRC) enhanced DCI detection-and-decoding information, frequency-hopping offset information, a symbol type, or whether cross-subband scheduling is supported.

According to embodiments, bit utilization in the first indication information can be improved, thereby realizing resource multiplexing and reducing signaling overhead.

In some embodiments, other bits in the frequency-domain resource indicator field can indicate the virtual CRC enhanced DCI detection-and-decoding information. Optionally, the virtual CRC enhanced DCI detection-and-decoding information can be a fixed value. If a result obtained by the terminal through detection and decoding is different from the fixed value, it indicates that detection error occurs. By carrying the virtual CRC enhanced DCI detection-and-decoding information in other bits, bits used for detection can be increased, thereby improving detection reliability.

In other embodiments, other bits in the frequency-domain resource indicator field can indicate the frequency-hopping offset information. Since the frequency-domain range of an SBFD symbol is different from the frequency-domain range of a non-SBFD symbol, the frequency hopping interval of an SBFD symbol is different from the frequency hopping interval of a non-SBFD symbol. By adding a frequency-hopping offset indication in other bits, the frequency hopping interval can be further adjusted, thereby ensuring that data is in a working frequency-domain range.

In other embodiments, other bits in the frequency-domain resource indicator field can indicate the symbol type and whether cross-subband scheduling is supported. The symbol type can indicate that a symbol where the target frequency-domain resource is located is an UL symbol, a DL symbol, or a flexible symbol. Whether cross-subband scheduling is supported can indicate whether the target frequency-domain resource can exceed the range of the first subband. By dynamically indicating the symbol type and whether cross-subband scheduling is supported via other bits, the terminal device can accurately parse the frequency-domain resource. Optionally, information to be indicated by other bits can also be determined according to the number of other bits. Those skilled in the art can set the usage of other bits according to actual needs, which is not limited in the disclosure.

In other examples, the number of bits in the frequency-domain resource indicator field in the first indication information may be less than the RBG number $K$ corresponding to the first RBG size. Based on this, *all M* bits in the indicator field can be set as a bitmap for frequency-domain resource indication if the number of bits in the frequency-domain resource indicator field is less than the first RBG, where the bitmap is used for indication of some of the $K$ RBGs.

In other words, if the number of bits in the frequency-domain resource indicator field in the first indication information is less than $K$, the bitmap includes $M$ bits corresponding to $M$ contiguous RBGs in *the* $K$ RBGs in the frequency-domain resource indicator field, where $M$ is the number of bits in the frequency-domain resource indicator field. Accordingly, the terminal device can determine, from the first indication information, the bitmap corresponding to all or some RBGs in the $K$ RBGs as follows. If the number of bits in the frequency-domain resource indicator field in the first indication information is less than $K$, the terminal device determines a bitmap corresponding to $M$ contiguous RBGs in the $K$ RBGs based on $M$ bits in the frequency-domain resource indicator field, where $M$ is the number of bits in the frequency-domain resource indicator field.

In some embodiments, the $M$ contiguous RBGs include the first $M$ RBGs in the $K$ RBGs or the last M RBGs in the $K$ RBGs. For example, $M=4$, and then the $M$ RBGs can be the 1st to 4th RBGs in the $K$ RBGs, or the fourth to last RBG to the last RBG in the $K$ RBGs. In some embodiments, RBGs in the K RBGs can be sorted in an ascending order of frequency.

In some embodiments, for embodiments in which the first indication information is parsed based on the second RBG size, the terminal device can implement in a similar way to that for parsing the first indication information based on the first RBG size. Specifically, the terminal device can parse the first indication information based on the second RBG size to determine the target frequency-domain resource as follows. The terminal device determines $N$ RBGs from the first subband based on the second RBG size, where $N$ is a positive integer and $N \leq M$. The terminal device obtains a bitmap corresponding to the $N$ RBGs based on $N$ consecutive bits in the frequency-domain resource indicator field in the first indication information, and determines the target frequency-domain resource from the N RBGs based on the bitmap.

In some embodiments, if the $i$th bit in the bitmap has a first value (for example, 1), the $i$th bit indicates that an RBG corresponding thereto is the target frequency-domain resource, where $i$ is a positive integer.

In some embodiments, if the $i$th bit in the bitmap has a second value (for example, 0), the $i$th bit indicates that an RBG corresponding thereto is not the target frequency-domain resource.

Implementation of each aspect of the resource indication method is described above by way of example. It can be understood that, multiple methods can be randomly combined without contradiction. For example, any one of the foregoing methods for determining the RBG size and any one of the foregoing methods for parsing the first indication information can be combined, and such combinations shall all belong to the protection scope of the disclosure. For the sake of better understanding, several embodiments of the disclosure are described below.

Embodiment 1

The resource indication method in this embodiment can include the following.

Step 1, a terminal device receives first indication information, where the first indication information indicates a target frequency-domain resource in a first subband.

In an implementation, a frequency-domain resource indicator field in the first indication information has $M$ bits, where the $M$ bits indicate the target frequency-domain resource in the first subband. The $M$ bits refer to bits actually used for frequency-domain resource indication, and do not include a bit for distinguishing a resource indication type. $M$ is determined according to the BWP bandwidth and the RBG configuration information.

Step 2, the terminal device parses the first indication information according to a first RBG size to determine the target frequency-domain resource. The first RBG size is determined according to the bandwidth of the first subband and RBG configuration information.

In an implementation, the terminal device divides the first subband into $K$ RBGs based on the first RBG size. If the number of bits $M$ in the frequency-domain resource indicator field in the first indication information is greater than or equal to $K$, the terminal device obtains a bitmap corresponding to the $K$ RBGs based on $K$ consecutive bits in the frequency-domain resource indicator field. If the number of bits $M$ in the frequency-domain resource indicator field in the first indication information is less than $K$, the terminal device obtains a bitmap corresponding to $M$ contiguous RBGs in the $K$ RBGs based on the $M$ bits in the frequency-domain resource indicator field. Then, the terminal device maps sequentially the RBGs onto bits in the bitmap, and determines, based on each bit, whether a RBG corresponding to the bit is the target frequency-domain resource.

As an example, $M$ bits correspond to $M$ RBGs. The $M$ RBGs are sorted in an ascending order of frequency, and are indexed starting from the lowest frequency of the first subband. The order of the $M$ bits is such that the M RBGs (RBG 0 to RBG $M$-1) are mapped from the MSB to the LSB. If an RBG is allocated to a UE, a bit corresponding to the RBG is 1; otherwise, the bit is 0.

For example, the terminal is configured with UL BWP = 100 RBs and RBG configuration 1. Then it can be seen from Table 1 that the RBG size $P$ corresponding to the BWP is 8 ($P$=8), and accordingly, it can be determined that the number of bits $M$ in the frequency-domain resource indicator field in DCI is 13 ($M$=13). In addition, the terminal is configured with UL subband = 70 RBs, and then according to UL subband = 70 and RBG configuration 1, it can be seen from Table 3 that the first RBG size is 4. Accordingly, the 13 bits in the frequency-domain resource indicator field in DCI are in one-to-one correspondence with RBG 0 to RBG 12, and each RBG includes 4 PRBs, that is, the 13 bits in the frequency-domain resource indicator field in the DCI correspond to RB 0 to RB 51 in the UL subband, rather than correspond to all RBs in the UL subband. This process can be referred to as truncation.

For another example, the terminal device is configured with UL BWP = 100 RBs and RBG configuration 1. Then it can be seen from Table 1 that the RBG size $P$ corresponding to the BWP is 8 ($P$=8), and accordingly, it can be determined that the number of bits $M$ in the frequency-domain resource indicator field in DCI is 13 ($M$=13). In addition, the terminal is configured with UL subband = 40 RBs, and then according to UL subband = 70 and RBG configuration 1, it can be seen from Table 3 that the first RBG size $P$ = 4. Accordingly, the number of RBGs $N$ in the UL subband is 10 ($N$=10). Since the number of RBGs $N$ in the UL subband is less than $M$, only some of the bits in the frequency-domain resource indicator field in DCI are used to indicate a scheduled frequency-domain resource. That is, only the last 10 bits in the 13 bits are in one-to-one correspondence with RBG 0 to RBG 9, where each RBG includes 4 PRBs. The first 3 bits can be used for virtual CRC enhanced DCI detection and decoding, or can be used for indicating other information, such as a frequency-hopping offset. This process can be referred to as redundancy.

As can be seen, in this embodiment, the method for determining the first RBG size is relatively simple. Limitation on the number of bits in the frequency-domain resource indicator field is handled through truncation or redundancy, and as such, indication accuracy can be improved according to the bandwidth of the first subband.

Embodiment 2

The resource indication method in this embodiment can include the following.

Step 1, a terminal device receives first indication information, where the first indication information indicates a target frequency-domain resource in a first subband.

Step 2, if the first RBG size satisfies a first condition, the terminal device parses the first indication information based on a first RBG size to determine the target frequency-domain resource. If the first RBG size does not satisfy the first condition, the terminal device parses the first indication information based on a second RBG size to determine the target frequency-domain resource. The first RBG size is determined based on the bandwidth of the first subband, and the second RBG size is determined based on a BWP bandwidth.

In an implementation, the first condition is related to the number of bits in a frequency-domain resource indicator field in the first indication information. For example, the first condition is: the number of bits $M$ in the frequency resource indicator field is greater than or equal to the first RBG number $K$, where $K$ is determined based on the first RBG size and the bandwidth of the first subband.

In an implementation, if the terminal device parses the first indication information based on the first RBG size, the terminal device determines $K$ RBGs from the first subband based on the first RBG size, and obtains a bitmap corresponding to the $K$ RBGs based on $K$ consecutive bits in the frequency-domain resource indicator field in the first indication information. If the terminal device parses the first indication information based on the second RBG size, the terminal device determines $N$ RBGs from the first subband based on the second RBG size, and obtains a bitmap corresponding to the $N$ RBGs based on $N$ consecutive bits in the frequency-domain resource indicator field in the first indication information. The terminal device determines the target frequency-domain resource based on the bitmap obtained by parsing.

That is, if $M >= K$, then the terminal parses $M$ bits according to the first RBG size. The $M$ bits correspond to $K$ RBGs, where the last $K$ bits correspond to RBG 0 to RBG $K$-1 which are mapped from the MSB to the LSB. If a certain RBG is allocated to a UE, a bit corresponding thereto is 1; otherwise, the bit is 0, where the RBG size is the first RBG size. The first $M$-$K$ bits can be used for virtual CRC enhanced DCI detection and decoding, or can be used to indicate other information, such as a frequency-hopping offset.

If $M<K$, then the terminal parses $M$ bits according to the second RBG size. If it is determined that the number of RBGs is $N$ according to the bandwidth of the first subband and the second RBG size, then the $M$ bits correspond to $N$ RBGs. The last $N$ bits correspond to RBG 0 to RBG $N$-1 which are mapped from the MSB to the LSB. If a certain RBG is allocated to the UE, a bit corresponding thereto is 1; otherwise, the bit is 0, where the RBG size is the second RBG size. The first $M$-$N$ bits can be used for virtual CRC enhanced DCI detection and decoding, or can be used to indicate other information, such as a frequency-hopping offset.

For example, the terminal is configured with UL BWP = 100 RBs and RBG configuration 1. Then it can be seen from Table 1 that the second RBG size $P$ = 8, and accordingly, it can be determined that the number of bits $M$ in the frequency-domain resource indicator field in DCI is 13 ($M$=13). If the terminal is configured with UL subband = 70, then according to UL subband = 70 and RBG configuration 1, it can be seen from Table 3 that that the first RBG size $P$ = 4, and the number of bits $K$ required for frequency-domain resource indication is 18 ($K$=18). Since $M <= K$, the terminal parses $M$ bits according to the second RBG size $P$=8, and determines that the number of RBGs $N$ is 9 ($N$=9) according to the UL subband and the second RBG size. Accordingly, the 13 bits correspond to 9 RBGs, where the last 9 bits correspond to RBG 0 to RBG 8 which are mapped from the MSB to the LSB. If a certain RBG is allocated to the UE, a bit corresponding thereto is 1; otherwise, the bit is 0, where the RBG size is 8. The first 4 bits can be used for virtual CRC enhanced DCI detection and decoding, or can be used to indicate other information, such as a frequency-hopping offset.

For another example, the terminal is configured with UL subband = 40, and then according to UL subband = 40 and RBG configuration 1, it can be seen from Table 3 that the first RBG size $P$ = 4 and the number of bits $K$ required for frequency-domain resource indication is 10 ($K$=10). Since $M>K$, the terminal parses $M$ bits according to the first RBG size $P$=4. The M bits correspond to 10 RBGs, where the last 10 bits correspond to RBG 0 to RBG 9 which are mapped from the MSB to the LSB. If a certain RBG is allocated to the UE, a bit corresponding thereto is 1; otherwise, the bit is 0, where the RBG size is 4. The first 3 bits can be used for virtual CRC enhanced DCI detection and decoding, or can be used to indicate other information, such as a frequency-hopping offset.

As can be seen, in this embodiment, by using the first RBG size and the second RBG size selectively, it can ensure that indication accuracy is improved as much as possible under limited overhead, and all RBs in the first subband can be indicated.

Embodiment 3

The resource indication method in this embodiment can include the following.

Step 1, a terminal device receives first indication information, where the first indication information indicates a target frequency-domain resource in a first subband.

Step 2, the terminal device determines, from a first set, an RBG size satisfying a second condition as a first RBG size, based on the bandwidth of the first subband and the number of bits in a frequency-domain resource indicator field in the first indication information.

In an implementation, the first RBG size is the smallest RBG size satisfying the second condition in the first set.

In an implementation, the second condition can include: the number of bits in the frequency-domain resource indicator field is greater than or equal to a second RBG number, where the second RBG number is determined based on the first RBG size and the bandwidth of the first subband.

In an implementation, the first set can include all or some of RBG sizes specified in a communication system. Alternatively, the first set can be determined based on the RBG configuration information. Specifically, multiple sets for different RBG configuration information can be preconfigured, and the terminal device can determine the first set from the multiple sets based on the current RBG configuration information. For example, RBG configuration 1 corresponds to set {2,4,8,16}, and RBG configuration 2 corresponds to set {4,8,16}. If the current RBG configuration is RBG configuration 1, then it can be determined that the first set is {2,4,8,16}.

Step 3, the terminal device parses the first indication information based on the first RBG size to determine the target frequency-domain resource. In an implementation, the terminal device determines $K$ RBGs from the first subband based on the first RBG size, obtains a bitmap corresponding to the $K$ RBGs based on $K$ consecutive bits in the frequency-domain resource indicator field in the first indication information, and determines the target frequency-domain resource based on the bitmap.

For example, the terminal is configured with UL BWP = 100 RBs and RBG configuration 1. Then it can be seen from Table 1 that the RBG size $P$ corresponding to the BWP is 8 ($P$=8), and accordingly, it can be determined that the number of bits $M$ in the frequency-domain resource indicator field in DCI is 13 ($M$=13). If the terminal is configured with UL subband = 70, it is determined from RBG size set {2,4,8,16} that the smallest first RBG size $P$ satisfying the condition is 8 ($P$=8). In this case, the number of bits $K$ required for frequency-domain resource indication is 9 ( $K=\lceil 70/8 \rceil =9$ ). Accordingly, the 13 bits correspond to 9 RBGs, where the last 9 bits correspond to RBG 0 to RBG 8 which are mapped from the MSB to the LSB. If a certain RBG is allocated to the UE, a bit corresponding to the RBG is 1; otherwise, the bit is 0, where the RBG size is 8. The first 4 bits can be used for virtual CRC enhanced DCI detection and decoding, or can be used to indicate other information, such as a frequency-hopping offset.

As can be seen, in this embodiment, by selecting an RBG size from a set, it can ensure that indication accuracy is improved as much as possible under limited overhead, and all RBs in the first subband can be indicated.

Embodiment 4

The resource indication method in this embodiment can include the following.

Step 1, a terminal device receives first indication information, where the first indication information indicates a target frequency-domain resource in a first subband.

Step 2, the terminal device obtains the number of RBs corresponding to each bit in a frequency-domain resource indicator field by dividing the number of RBs in the first subband by the number of bits in the frequency-domain resource indicator field, where the number of RBs is a first RBG size. In an implementation, if the division result is not an integer, rounding-up can be performed to obtain the first RBG size.

Step 3, the terminal device parses the first indication information based on the first RBG size to determine the target frequency-domain resource. In an implementation, the terminal device determines $K$ RBGs from the first subband based on the first RBG size, obtains a bitmap corresponding to the $K$ RBGs based on $K$ consecutive bits in the frequency-domain resource indicator field in the first indication information, and determines the target frequency-domain resource based on the bitmap.

For example, the terminal is configured with UL BWP = 100 RBs and RBG configuration 1. Then it can be seen from Table 1 that the RBG size $P$ corresponding to the BWP is 8 ($P$=8), and accordingly, it can be determined that the number of bits $M$ in the frequency-domain resource indicator field in DCI is 13 ($M$=13). If the terminal is configured with UL subband = 70, then the first RBG size $P=\lceil 70/13 \rceil =6$ . The number of bits $K$ required for frequency-domain resource indication is 12 ( $K=\lceil 70/6 \rceil =12$ ). Accordingly, the 13 bits correspond to 12 RBGs, where the last 12 bits correspond to RBG 0 to RBG 11 that are mapped from the MSB to the LSB. If a certain RBG is allocated to the UE, a bit corresponding to the RBG is 1; otherwise, the bit is 0, where the RBG size is 6. The first 1 bit can be used for virtual CRC enhanced DCI detection and decoding, or can be used to indicate other information, such as a frequency-hopping offset.

As can be seen, in this embodiment, by determining the first RBG size according to the bandwidth of the first subband and the number of bits in the frequency-domain resource indicator field, it can ensure that indication accuracy is improved as much as possible under limited overhead, and all RBs in the first subband can be indicated.

FIG. 4 is a schematic flowchart of a resource indication method according to an embodiment of the disclosure. The method can optionally be applied to the system illustrated in FIG. 1, but is not limited thereto. The method includes all or some of the following.

S401, a network device sends first indication information, where the first indication information is determined based on a first RBG size, and the first indication information indicates a target frequency-domain resource in a first subband.

In some embodiments, the resource indication method can further include the following. The network device determines the first RBG size based on the bandwidth of the first subband. The network device determines the first indication information based on the first RBG size if the first RBG size satisfies a first condition, where the first condition is related to the number of bits in a frequency-domain resource indicator field in the first indication information.

In some embodiments, first indication information can be determined based on the first RBG size as follows. For each bit, an RBG corresponding to the bit in the frequency-domain resource indicator field is determined based on the first RBG size, and the bit is encoded based on whether the RBG corresponding to the bit is allocated to a terminal, to obtain the frequency-domain resource indicator field. The first indication information is determined based on the frequency-domain resource indicator field.

In some embodiments, the first condition includes: the number of bits in the frequency-domain resource indicator field is greater than or equal to a first RBG number, where the first RBG number is determined based on the first RBG size and the bandwidth of the first subband.

In some embodiments, the resource indication method can further include the following. If the first RBG size does not satisfy the first condition, the network device determines the first indication information based on a second RBG size. where the second RBG size is determined based on a BWP bandwidth.

In some embodiments, the resource indication method can further include the following. The network device determines a first RBG size that satisfies a second condition from a first set based on the bandwidth of the first subband and the number of bits in the frequency-domain resource indicator field in the first indication information.

In some embodiments, the first RBG size is a smallest RBG size that satisfies the second condition in the first set.

In some embodiments, the first set is determined based on RBG configuration information.

In some embodiments, the second condition includes: the number of bits in the frequency-domain resource indicator field is greater than or equal to a second RBG number, where the second RBG number is determined based on the first RBG size and the bandwidth of the first subband.

In some embodiments, the resource indication method can further include the following. The network device obtains the first RBG size based on the bandwidth of the first subband and the number of bits in the frequency-domain resource indicator field in the first indication information.

For the implementation of the technical details in the method performed by a network device in this embodiment, reference can be made to related elaborations of the network device such as a base station in the foregoing method performed by a terminal device. In some embodiments, the first indication information can include a bitmap. Information in the bitmap can be implemented with reference to the foregoing embodiments. For example, the bitmap includes $K$ consecutive bits corresponding to $K$ RBGs or $M$ bits corresponding to $M$ contiguous RBGs in the $K$ RBGs in the frequency-domain resource indicator field in the first indication information which are not described herein again for the sake of brevity.

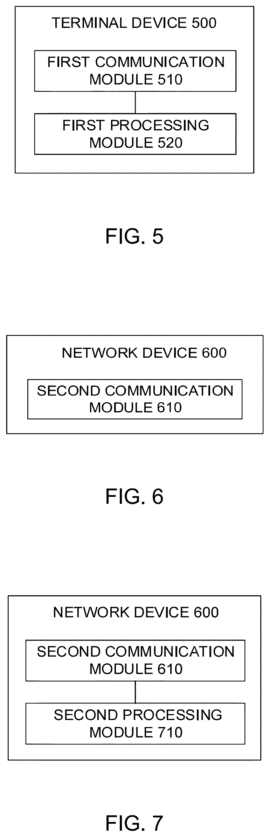

FIG. 5 is a schematic block diagram of a terminal device 500 according to an embodiment of the disclosure. The terminal device 500 can include a first communication module 510 and a first processing module 520. The first communication module 510 is configured to receive first indication information, where the first indication information indicates a target frequency-domain resource in a first subband. The first processing module 520 is configured to parse the first indication information based on a first RBG size to determine the target frequency-domain resource.

In an implementation, the first subband is an UL subband in a DL time-domain resource, or an UL subband in a flexible time-domain resource, or a DL subband in an UL time-domain resource, or a DL subband in a flexible time-domain resource.

In an implementation, the first RBG size is determined based on at least one of: RBG configuration information; the number of bits in a frequency-domain resource indicator field in the first indication information; a bandwidth of the first subband; or a bandwidth part (BWP) bandwidth.

In an implementation, the first processing module 520 is further configured to: parse the first indication information based on the first RBG size to determine the target frequency-domain resource if the first RBG size satisfies a first condition, where the first RBG size is determined based on the bandwidth of the first subband, and the first condition is related to the number of bits in the frequency-domain resource indicator field in the first indication information.

In an implementation, the first condition includes: the number of bits in the frequency-domain resource indicator field is greater than or equal to a first RBG number, where the first RBG number is determined based on the first RBG size and the bandwidth of the first subband.

In an implementation, the first processing module 520 is further configured to: parse the first indication information based on a second RBG size to determine the target frequency-domain resource if the first RBG size does not satisfy the first condition, where the second RBG size is determined based on the BWP bandwidth.

In an implementation, the first processing module 520 is further configured to: determine a first RBG size that satisfies a second condition from a first set based on the bandwidth of the first subband and the number of bits in the frequency-domain resource indicator field in the first indication information.

In an implementation, the first RBG size is a smallest RBG size that satisfies the second condition in the first set.

In an implementation, the first set is determined based on the RBG configuration information.

In an implementation, the second condition includes: the number of bits in the frequency-domain resource indicator field is greater than or equal to a second RBG number, where the second RBG number is determined based on the first RBG size and the bandwidth of the first subband.

In an implementation, the first processing module 520 is further configured to: obtain the first RBG size based on the bandwidth of the first subband and the number of bits in the frequency-domain resource indicator field in the first indication information.

In an implementation, the first processing module 520 is further configured to: determine K RBGs from the first subband based on the first RBG size, where $K$ is a positive integer; and determine, from the first indication information, a bitmap corresponding to all or some RBGs in the K RBGs, and determine the target frequency-domain resource from the all or some RBGs based on the bitmap.

In an implementation, the first processing module 520 is further configured to: determine a bitmap corresponding to the $K$ RBGs based on $K$ consecutive bits in the frequency-domain resource indicator field in the first indication information.

In an implementation, the first processing module 520 is further configured to: determine a bitmap corresponding to the $K$ RBGs based on $K$ consecutive bits in the frequency-domain resource indicator field if the number of bits in the frequency-domain resource indicator field in the first indication information is greater than or equal to $K$.

In an implementation, the $K$ consecutive bits are the last $K$ bits in the frequency-domain resource indicator field or the first $K$ bits in the frequency-domain resource indicator field.

In an implementation, bits in the frequency-domain resource indicator field other than the $K$ bits indicate at least one of: virtual CRC enhanced DCI detection-and-decoding information; frequency-hopping offset information; a symbol type; or whether cross-subband scheduling is supported.

In an implementation, the first processing module 520 is further configured to: determine a bitmap corresponding to $M$ contiguous RBGs in the $K$ RBGs based on $M$ bits in the frequency-domain resource indicator field if the number of bits in the frequency-domain resource indicator field in the first indication information is less than $K$, where $M$ is the number of bits in the frequency-domain resource indicator field.

In an implementation, the $M$ contiguous RBGs are the first M RBGs in the $K$ RBGs or the last M RBGs in the $K$ RBGs.

In an implementation, the number of bits in the frequency-domain resource indicator field in the first indication information is determined based on the BWP bandwidth and/or the RBG configuration information.

The terminal device 500 in embodiments of the disclosure can implement corresponding functions of the terminal device in the foregoing method embodiments. For corresponding processes, functions, implementations, and beneficial effects of various modules (sub-modules, units, or components) in the terminal device 500, reference can be made to corresponding elaborations in the foregoing method embodiments, which are not repeatedly described herein. It should be noted that, the described functions of various modules (sub-modules, units, or components, etc.) in the terminal device 500 according to embodiments of the disclosure can be implemented by different modules (sub-modules, units, or components, etc.), or can be implemented by the same module (sub-module, unit, or component, etc.).

FIG. 6 is a schematic block diagram of a network device 600 according to an embodiment of the disclosure. The network device 600 can include a second communication module 610. The second communication module 610 is configured to send first indication information, where the first indication information is determined based on a first RBG size, and the first indication information indicates a target frequency-domain resource in a first subband.

In an implementation, the first subband is an UL subband in a DL time-domain resource, or an UL subband in a flexible time-domain resource, or a DL subband in an UL time-domain resource, or a DL subband in a flexible time-domain resource.

In an implementation, the first RBG size is determined based on at least one of: RBG configuration information; the number of bits in a frequency-domain resource indicator field in the first indication information; a bandwidth of the first subband; or a BWP bandwidth.

In an implementation, as illustrated in FIG. 7, the network device 600 further includes a second processing module 710. The second processing module 710 is configured to: determine the first RBG size based on the bandwidth of the first subband, and determine the first indication information based on the first RBG size if the first RBG size satisfies a first condition, where the first condition is related to the number of bits in the frequency-domain resource indicator field in the first indication information.

In an implementation, the first condition includes: the number of bits in the frequency-domain resource indicator field is greater than or equal to a first RBG number, where the first RBG number is determined based on the first RBG size and the bandwidth of the first subband.

In an implementation, the second processing module 710 is further configured to: determine the first indication information based on a second RBG size if the first RBG size does not satisfy the first condition, where the second RBG size is determined based on the BWP bandwidth.

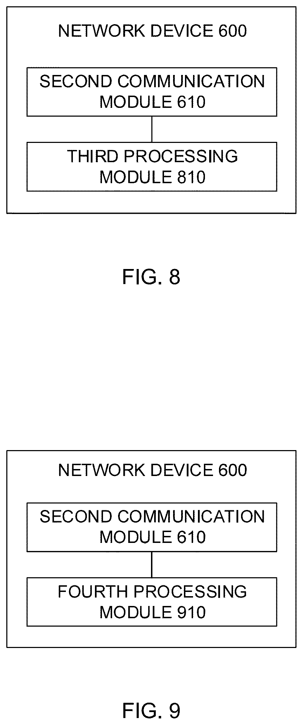

In an implementation, as illustrated in FIG. 8, the network device 600 further includes a third processing module 810. The third processing module 810 is configured to: determine a first RBG size that satisfies a second condition from a first set based on the bandwidth of the first subband and the number of bits in the frequency-domain resource indicator field in the first indication information.

In an implementation, the first RBG size is a smallest RBG size that satisfies the second condition in the first set.

In an implementation, the first set is determined based on the RBG configuration information.

In an implementation, the second condition includes: the number of bits in the frequency-domain resource indicator field is greater than or equal to a second RBG number, where the second RBG number is determined based on the first RBG size and the bandwidth of the first subband.

In an implementation, as illustrated in FIG. 9, the network device 600 further includes a fourth processing module 910. The fourth processing module 910 is configured to: obtain the first RBG size based on the bandwidth of the first subband and the number of bits in the frequency-domain resource indicator field in the first indication information.

In an implementation, the first indication information includes a bitmap corresponding to all or some RBGs in $K$ RBGs, and the $K$ RBGs are determined from the first subband based on the first RBG size, where $K$ is a positive integer.

In an implementation, the bitmap includes $K$ consecutive bits corresponding to the $K$ RBGs in the frequency-domain resource indicator field in the first indication information.

In an implementation, if the number of bits in the frequency-domain resource indicator field in the first indication information is greater than or equal to $K$, the bitmap includes $K$ consecutive bits corresponding to the $K$ RBGs in the frequency-domain resource indicator field in the first indication information.

In an implementation, the $K$ consecutive bits are the last $K$ bits in the frequency-domain resource indicator field or the first $K$ bits in the frequency-domain resource indicator field.

In an implementation, bits in the frequency-domain resource indicator field other than the K bits indicate at least one of: virtual CRC enhanced DCI detection-and-decoding information; frequency-hopping offset information; a symbol type; or whether cross-subband scheduling is supported.

In an implementation, if the number of bits in the frequency-domain resource indicator field in the first indication information is less than $K$, the bitmap includes $M$ bits corresponding to $M$ contiguous RBGs in the $K$ RBGs in the frequency-domain resource indicator field, where $M$ is the number of bits in the frequency-domain resource indicator field.

In one embodiment, the $M$ contiguous RBGs are the first $M$ RBGs in the K RBGs or the last $M$ RBGs in the $K$ RBGs.

In an implementation, the number of bits in the frequency-domain resource indicator field in the first indication information is determined based on the BWP bandwidth and/or the RBG configuration information.

The network device 600 in embodiments of the disclosure can implement corresponding functions of the network device in the foregoing method embodiments. For corresponding processes, functions, implementations, and beneficial effects of various modules (sub-modules, units, or components) in the network device 600, reference can be made to corresponding elaborations in the foregoing method embodiments, which are not repeatedly described herein. It should be noted that, the described functions of various modules (sub-modules, units, or components, etc.) in the network device 600 according to embodiments of the disclosure can be implemented by different modules (sub-modules, units, or components, etc.), or can be implemented by the same module (sub-module, unit, or component, etc.).

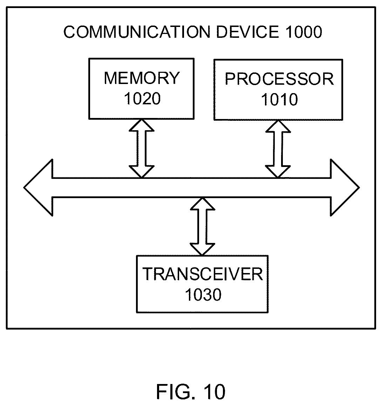

FIG. 10 is a schematic structural diagram of a communication device 1000 according to embodiments of the disclosure. The communication device 1000 includes a processor 1010. The processor 1010 can invoke and execute computer programs stored in a memory, to cause the communication device 1000 to implement the method in embodiments of the disclosure.

In an implementation, the communication device 1000 can further include a memory 1020. The processor 1010 can invoke and execute computer programs from the memory 1020, to cause the communication device 1000 to implement the method in embodiments of the disclosure.

The memory 1020 can be a separate device independent of the processor 1010, or can be integrated into the processor 1010.

In an implementation, the communication device 1000 can further include a transceiver 1030. The processor 1010 can control the transceiver 1030 to communicate with other devices, and specifically, can send information or data to other devices or receive information or data sent by other devices.

The transceiver 1030 can include a transmitter and a receiver. The transceiver 1030 can further include an antenna, where one or more antennas can be provided.

In an implementation, the communication device 1000 can be a terminal device in embodiments of the disclosure, and the communication device 1000 can implement corresponding processes implemented by the terminal device in various methods in embodiments of the disclosure, which are not described herein again for brevity.

In an implementation, the communication device 1000 can be a network device in embodiments of the disclosure, and the communication device 1000 can implement corresponding processes implemented by the network device in various methods in embodiments of the disclosure, which are not described herein again for brevity.

It should be noted that, the communication modules in the terminal device and the network device in embodiments of the disclosure, such as the first communication module 510 and the second communication module 610, can be implemented by the transceiver of the communication device 1000. In addition, processing modules for implementing processing operations in the terminal device and the network device in embodiments of the disclosure, such as the first processing module 520, the second processing module 710, the third processing module 810, and the fourth processing module 910, can be partially or completely implemented by the processor of the communication device 1000.

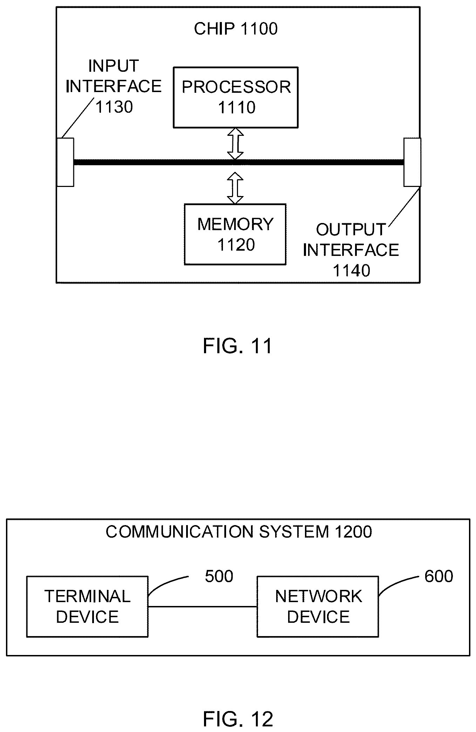

FIG. 11 is a schematic structural diagram of a chip 1100 according to embodiments of the present disclosure. The chip 1100 includes a processor 1110. The processor 1110 can invoke and execute computer programs from a memory, to implement the method in embodiments of the present disclosure.

In an embodiment, the chip 1100 can further include a memory 1120. The processor 1110 can invoke and execute computer programs from the memory 1120, so as to implement the method performed by the first terminal or the second terminal in embodiments of the disclosure.

The memory 1120 can be a separate component independent of the processor 1110, or can be integrated into the processor 1110.

In an implementation, the chip 1100 can further include an input interface 1130. The processor 1110 can control the input interface 1130 to communicate with other devices or chips, and specifically, can obtain information or data sent by other devices or chips.

In an implementation, the chip 1100 can further include an output interface 1140. The processor 1110 can control the output interface 1140 to communicate with other devices or chips, and specifically, can output information or data to other devices or chips.

In an implementation, the chip can be applied to a terminal device in embodiments of the disclosure, and the chip can implement corresponding processes implemented by the terminal device in various methods in embodiments of the disclosure, which are not described herein again for brevity.

In an implementation, the chip can be applied to the network device in embodiments of the disclosure, and the chip can implement corresponding processes implemented by the network device in various methods in embodiments of the disclosure, which are not described herein again for brevity.

It should be understood that, the chip mentioned in embodiments of the disclosure can also be referred to as a system-on-chip (SOC), or the like.

The foregoing processor can be a general-purpose processor, a digital signal processor (DSP), a field programmable gate array (FPGA), an application specific integrated circuit (ASIC), or other programmable logic devices, discrete gates or transistor logic devices, discrete hardware components. The general-purpose processor can be a microprocessor, or the processor can be any conventional processor or the like.

The memory mentioned above can be a volatile memory or a non-volatile memory, or can include both the volatile memory and the non-volatile memory. The non-volatile memory may be a read-only memory (ROM), a programmable ROM (PROM), an erasable PROM (EPROM), an electrically EPROM (EEPROM), or flash memory. The volatile memory can be a random access memory (RAM).

It should be understood that, the memory above is intended for illustration rather than limitation. For example, the memory in embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), a direct rambus RAM (DR RAM), etc. In other words, the memory in embodiments of the disclosure is intended to include, but is not limited to, these and any other suitable types of memory.

FIG. 12 is a schematic block diagram of a communication system 1200 according to embodiments of the disclosure. The communication system 1200 includes a terminal device 500 and a network device 600. The network device 600 is configured to send first indication information, where the first indication information is determined based on a first RBG size, and the first indication information indicates a target frequency-domain resource in a first subband. The terminal device 500 is configured to receive the first indication information and parse the first indication information based on the first RBG sizes to determine the target frequency-domain resource.

All or some of the above embodiments can be implemented through software, hardware, firmware, or any other combination thereof. When implemented by software, all or some the above embodiments can be implemented in the form of a computer program product. The computer program product includes one or more computer instructions. When the computer instructions are applied and executed on a computer, all or some the operations or functions of the embodiments of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

It should be understood that, in various embodiments of the disclosure, the magnitude of a sequence number of each of the foregoing processes does not imply an execution order, and the execution order between the processes should be determined according to function and internal logic thereof, which shall not constitute any limitation to the implementation of embodiments of the disclosure.

It will be evident to those skilled in the art that, for the sake of convenience and brevity, in terms of the specific working processes of the foregoing systems, apparatuses, and units, reference can be made to the corresponding processes in the foregoing method embodiments, which will not be described in detail again herein.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1.  A resource indication method, comprising:

    receiving, by a terminal device, first indication information, wherein the first indication information indicates a target frequency-domain resource in a first subband; and
    parsing, by the terminal device, the first indication information based on a first resource block group (RBG) size, to determine the target frequency-domain resource.

2.  The method of claim 1, wherein the first subband is an uplink (UL) subband in a downlink (DL) time-domain resource, or an UL subband in a flexible time-domain resource, or a DL subband in an UL time-domain resource, or a DL subband in a flexible time-domain resource.

3.  The method of claim 1 or 2, wherein the first RBG size is determined based on at least one of:

    RBG configuration information;
    the number of bits in a frequency-domain resource indicator field in the first indication information;
    a bandwidth of the first subband; or
    a bandwidth part (BWP) bandwidth.

4.  The method of any of claims 1 to 3, wherein parsing, by the terminal device, the first indication information based on the first RBG size to determine the target frequency-domain resource comprises:
    when the first RBG size satisfies a first condition, parsing, by the terminal device, the first indication information based on the first RBG size to determine the target frequency-domain resource, wherein the first RBG size is determined based on the bandwidth of the first subband, and the first condition is related to the number of bits in the frequency-domain resource indicator field in the first indication information.

5.  The method of claim 4, wherein the first condition comprises:
    the number of bits in the frequency-domain resource indicator field is greater than or equal to a first RBG number, wherein the first RBG number is determined based on the first RBG size and the bandwidth of the first subband.

6.  The method of claim 4 or 5, further comprising:
    when the first RBG size does not satisfy the first condition, parsing, by the terminal device, the first indication information based on a second RBG size to determine the target frequency-domain resource, wherein the second RBG size is determined based on the BWP bandwidth.

7.  The method of any of claims 1 to 3, further comprising:
    determining, by the terminal device, a first RBG size that satisfies a second condition from a first set based on the bandwidth of the first subband and the number of bits in the frequency-domain resource indicator field in the first indication information.

8.  The method of claim 7, wherein the first RBG size is a smallest RBG size that satisfies the second condition in the first set.

9. The method of claim 7 or 8, wherein the first set is determined based on the RBG configuration information.

10. The method of any of claims 7 to 9, wherein the second condition comprises:
the number of bits in the frequency-domain resource indicator field is greater than or equal to a second RBG number, wherein the second RBG number is determined based on the first RBG size and the bandwidth of the first subband.

11. The method of any of claims 1 to 3, further comprising:
obtaining, by the terminal device, the first RBG size based on the bandwidth of the first subband and the number of bits in the frequency-domain resource indicator field in the first indication information.

12. The method of any of claims 1 to 11, wherein parsing, by the terminal device, the first indication information based on the first RBG size to determine the target frequency-domain resource comprises:

determining, by the terminal device, $K$ RBGs from the first subband based on the first RBG size, wherein $K$ is a positive integer; and
determining, by the terminal device from the first indication information, a bitmap corresponding to all or some RBGs in the $K$ RBGs, and determining the target frequency-domain resource from the all or some RBGs based on the bitmap.

13. The method of claim 12, wherein determining, by the terminal device from the first indication information, the bitmap corresponding to all or some RBGs in the $K$ RBGs comprises:
determining, by the terminal device, a bitmap corresponding to the $K$ RBGs based on $K$ consecutive bits in the frequency-domain resource indicator field in the first indication information.

14. The method of claim 12, wherein determining, by the terminal device from the first indication information, the bitmap corresponding to all or some RBGs in the $K$ RBGs comprises:
when the number of bits in the frequency-domain resource indicator field in the first indication information is greater than or equal to $K,$ determining, by the terminal device, a bitmap corresponding to the $K$ RBGs based on $K$ consecutive bits in the frequency-domain resource indicator field.

15. The method of claim 13 or 14, wherein the $K$ consecutive bits are the last $K$ bits in the frequency-domain resource indicator field or the first $K$ bits in the frequency-domain resource indicator field.

16. The method of any of claims 13 to 15, wherein bits in the frequency-domain resource indicator field other than the $K$ bits indicate at least one of:

virtual cyclic redundancy check (CRC) enhanced downlink control information (DCI) detection-and-decoding information;
frequency-hopping offset information;
a symbol type; or
whether cross-subband scheduling is supported.

17. The method of claim 12, wherein determining, by the terminal device, from the first indication information the bitmap corresponding to all or some RBGs in the $K$ RBGs comprises:
when the number of bits in the frequency-domain resource indicator field in the first indication information is less than $K,$ determining, by the terminal device, a bitmap corresponding to $M$ contiguous RBGs in the $K$ RBGs based on $M$ bits in the frequency-domain resource indicator field, wherein $M$ is the number of bits in the frequency-domain resource indicator field.

18. The method of claim 17, wherein the $M$ contiguous RBGs are the first $M$ RBGs in the $K$ RBGs or the last $M$ RBGs in the $K$ RBGs.

19. The method of any of claims 1 to 18, wherein the number of bits in the frequency-domain resource indicator field in the first indication information is determined based on the BWP bandwidth and/or the RBG configuration information.

20. A resource indication method, comprising:

sending, by a network device, first indication information, wherein the first indication information is determined based on a first resource block group (RBG) size, and the first indication information indicates a target frequency-domain resource in a first subband.

21. The method of claim 20, wherein the first subband is an uplink (UL) subband in a downlink (DL) time-domain resource, or an UL subband in a flexible time-domain resource, or a DL subband in an UL time-domain resource, or a DL subband in a flexible time-domain resource.

22. The method of claim 20 or 21, wherein the first RBG size is determined based on at least one of:

RBG configuration information;
the number of bits in a frequency-domain resource indicator field in the first indication information;
a bandwidth of the first subband; or
a bandwidth part (BWP) bandwidth.

23. The method of any of claims 20 to 22, further comprising:

determining, by the network device, the first RBG size based on the bandwidth of the first subband; and
determining, by the network device, the first indication information based on the first RBG size when the first RBG size satisfies a first condition, wherein the first condition is related to the number of bits in the frequency-domain resource indicator field in the first indication information.

24. The method of claim 23, wherein the first condition comprises:
the number of bits in the frequency-domain resource indicator field is greater than or equal to a first RBG number, wherein the first RBG number is determined based on the first RBG size and the bandwidth of the first subband.

25. The method of claim 23 or 24, further comprising:
determining, by the network device, the first indication information based on a second RBG size in the case when the first RBG size does not satisfy the first condition, wherein the second RBG size is determined based on the BWP bandwidth.

26. The method of any of claims 20 to 22, further comprising:
determining, by the network device, a first RBG size that satisfies a second condition from a first set based on the bandwidth of the first subband and the number of bits in the frequency-domain resource indicator field in the first indication information.

27. The method of claim 26, wherein the first RBG size is a smallest RBG size that satisfies the second condition in the first set.

28. The method of claim 26 or 27, wherein the first set is determined based on the RBG configuration information.

29. The method of any of claims 26 to 28, wherein the second condition comprises:
the number of bits in the frequency-domain resource indicator field is greater than or equal to a second RBG number, wherein the second RBG number is determined based on the first RBG size and the bandwidth of the first subband.

30. The method of any of claims 20 to 22, further comprising:
obtaining, by the network device, the first RBG size based on the bandwidth of the first subband and the number of bits in the frequency-domain resource indicator field in the first indication information.

31. The method of any of claims 20 to 30, wherein the first indication information comprises a bitmap corresponding to all or some RBGs in $K$ RBGs, and the $K$ RBGs are determined from the first subband based on the first RBG size, wherein $K$ is a positive integer.

32. The method of claim 31, wherein the bitmap comprises $K$ consecutive bits corresponding to the $K$ RBGs in the frequency-domain resource indicator field in the first indication information.

33. The method of claim 31, wherein when the number of bits in the frequency-domain resource indicator field in the first indication information is greater than or equal to $K$, the bitmap comprises $K$ consecutive bits corresponding to the $K$

RBGs in the frequency-domain resource indicator field in the first indication information.

34. The method of claim 32 or 33, wherein the $K$ consecutive bits are the last $K$ bits in the frequency-domain resource indicator field or the first $K$ bits in the frequency-domain resource indicator field.

35. The method of any of claims 32 to 34, wherein bits in the frequency-domain resource indicator field other than the $K$ bits indicate at least one of:

   virtual cyclic redundancy check (CRC) enhanced downlink control information (DCI) detection-and-decoding information;
   frequency-hopping offset information;
   a symbol type; or
   whether cross-subband scheduling is supported.

36. The method of claim 31, wherein when the number of bits in the frequency-domain resource indicator field in the first indication information is less than $K$, the bitmap comprises $M$ bits corresponding to $M$ contiguous RBGs in the $K$ RBGs in the frequency-domain resource indicator field, wherein $M$ is the number of bits in the frequency-domain resource indicator field.

37. The method of claim 36, wherein the $M$ contiguous RBGs are the first $M$ RBGs in the $K$ RBGs or the last $M$ RBGs in the $K$ RBGs.

38. The method of any of claims 20 to 37, wherein the number of bits in the frequency-domain resource indicator field in the first indication information is determined based on the BWP bandwidth and/or the RBG configuration information.

39. A terminal device, comprising:

   a first communication module configured to receive first indication information, wherein the first indication information indicates a target frequency-domain resource in a first subband; and
   a first processing module configured to parse the first indication information based on a first resource block group (RBG) size, to determine the target frequency-domain resource.

40. The terminal device of claim 39, wherein the first subband is an uplink (UL) subband in a downlink (DL) time-domain resource, or an UL subband in a flexible time-domain resource, or a DL subband in an UL time-domain resource, or a DL subband in a flexible time-domain resource.

41. The terminal device of claim 39 or 40, wherein the first RBG size is determined based on at least one of:

   RBG configuration information;
   the number of bits in a frequency-domain resource indicator field in the first indication information;
   a bandwidth of the first subband; or
   a bandwidth part (BWP) bandwidth.

42. The terminal device of any of claims 39 to 41, wherein the first processing module is further configured to:
   when the first RBG size satisfies a first condition, parse the first indication information based on the first RBG size to determine the target frequency-domain resource, wherein the first RBG size is determined based on the bandwidth of the first subband, and the first condition is related to the number of bits in the frequency-domain resource indicator field in the first indication information.

43. The terminal device of claim 42, wherein the first condition comprises:
   the number of bits in the frequency-domain resource indicator field is greater than or equal to a first RBG number, wherein the first RBG number is determined based on the first RBG size and the bandwidth of the first subband.

44. The terminal device of claim 42 or 43, wherein the first processing module is further configured to:
   when the first RBG size does not satisfy the first condition, parse the first indication information based on a second RBG size to determine the target frequency-domain resource, wherein the second RBG size is determined based on the BWP bandwidth.

45. The terminal device of any of claims 39 to 41, wherein the first processing module is further configured to: determine a first RBG size that satisfies a second condition from a first set based on the bandwidth of the first subband and the number of bits in the frequency-domain resource indicator field in the first indication information.

46. The terminal device of claim 45, wherein the first RBG size is a smallest RBG size that satisfies the second condition in the first set.

47. The terminal device of claim 45 or 46, wherein the first set is determined based on the RBG configuration information.

48. The terminal device of any of claims 45 to 47, wherein the second condition comprises: the number of bits in the frequency-domain resource indicator field is greater than or equal to a second RBG number, wherein the second RBG number is determined based on the first RBG size and the bandwidth of the first subband.

49. The terminal device of any of claims 39 to 41, wherein the first processing module is further configured to: obtain the first RBG size based on the bandwidth of the first subband and the number of bits in the frequency-domain resource indicator field in the first indication information.

50. The terminal device of any of claims 39 to 49, wherein the first processing module is further configured to:

   determine $K$ RBGs from the first subband based on the first RBG size, wherein $K$ is a positive integer; and determine, from the first indication information, a bitmap corresponding to all or some RBGs in the $K$ RBGs, and determine the target frequency-domain resource from the all or some RBGs based on the bitmap.

51. The terminal device of claim 50, wherein the first processing module is further configured to: determine a bitmap corresponding to the $K$ RBGs based on $K$ consecutive bits in the frequency-domain resource indicator field in the first indication information.

52. The terminal device of claim 50, wherein the first processing module is further configured to: when the number of bits in the frequency-domain resource indicator field in the first indication information is greater than or equal to $K$, determine a bitmap corresponding to the $K$ RBGs based on $K$ consecutive bits in the frequency-domain resource indicator field.

53. The terminal device of claim 51 or 52, wherein the $K$ consecutive bits are the last K bits in the frequency-domain resource indicator field or the first $K$ bits in the frequency-domain resource indicator field.

54. The terminal device of any of claims 51 to 53, wherein bits in the frequency-domain resource indicator field other than the $K$ bits indicate at least one of:

   virtual cyclic redundancy check (CRC) enhanced downlink control information (DCI) detection-and-decoding information;
   frequency-hopping offset information;
   a symbol type; or
   whether cross-subband scheduling is supported.

55. The terminal device of claim 50, wherein the first processing module is further configured to: when the number of bits in the frequency-domain resource indicator field in the first indication information is less than $K$, determine a bitmap corresponding to $M$ contiguous RBGs in the $K$ RBGs based on $M$ bits in the frequency-domain resource indicator field, wherein $M$ is the number of bits in the frequency-domain resource indicator field.

56. The terminal device of claim 55, wherein the $M$ contiguous RBGs are the first $M$ RBGs in the $K$ RBGs or the last $M$ RBGs in the $K$ RBGs.

57. The terminal device of any of claims 39 to 56, wherein the number of bits in the frequency-domain resource indicator field in the first indication information is determined based on the BWP bandwidth and/or the RBG configuration information.

58. A network device comprising:
   a second communication module configured to send first indication information, wherein the first indication information is determined based on a first resource block group (RBG) size, and the first indication information indicates a target frequency-domain resource in a first subband.

59. The network device of claim 58, wherein the first subband is an uplink (UL) subband in a downlink (DL) time-domain resource, or an UL subband in a flexible time-domain resource, or a DL subband in an UL time-domain resource, or a DL subband in a flexible time-domain resource.

60. The network device of claim 58 or 59, wherein the first RBG size is determined based on at least one of:

    RBG configuration information;
    the number of bits in a frequency-domain resource indicator field in the first indication information;
    a bandwidth of the first subband; or
    a bandwidth part (BWP) bandwidth.

61. The network device of any of claims 58 to 60, wherein the network device further comprises:
    a second processing module configured to:

    determine the first RBG size based on the bandwidth of the first subband; and
    determine the first indication information based on the first RBG size when the first RBG size satisfies a first condition, wherein the first condition is related to the number of bits in the frequency-domain resource indicator field in the first indication information.

62. The network device of claim 61, wherein the first condition comprises:
    the number of bits in the frequency-domain resource indicator field is greater than or equal to a first RBG number, wherein the first RBG number is determined based on the first RBG size and the bandwidth of the first subband.

63. The network device of claim 61 or 62, wherein the second processing module is further configured to:
    determine the first indication information based on a second RBG size in the case when the first RBG size does not satisfy the first condition, wherein the second RBG size is determined based on the BWP bandwidth.

64. The network device of any of claims 58 to 60, wherein the network device further comprises:
    a third processing module configured to determine a first RBG size that satisfies a second condition from a first set based on the bandwidth of the first subband and the number of bits in the frequency-domain resource indicator field in the first indication information.

65. The network device of claim 64, wherein the first RBG size is a smallest RBG size that satisfies the second condition in the first set.

66. The network device of claim 64 or 65, wherein the first set is determined based on the RBG configuration information.

67. The network device of any of claims 64 to 66, wherein the second condition comprises:
    the number of bits in the frequency-domain resource indicator field is greater than or equal to a second RBG number, wherein the second RBG number is determined based on the first RBG size and the bandwidth of the first subband.

68. The network device of any of claims 58 to 60, wherein the network device further comprises:
    a fourth processing module configured to obtain the first RBG size based on the bandwidth of the first subband and the number of bits in the frequency-domain resource indicator field in the first indication information.

69. The network device of any of claims 58 to 68, wherein the first indication information comprises a bitmap corresponding to all or some RBGs in $K$ RBGs, and the $K$ RBGs are determined from the first subband based on the first RBG size, wherein $K$ is a positive integer.

70. The network device of claim 69, wherein the bitmap comprises $K$ consecutive bits corresponding to the $K$ RBGs in the frequency-domain resource indicator field in the first indication information.

71. The network device of claim 69, wherein when the number of bits in the frequency-domain resource indicator field in the first indication information is greater than or equal to $K$, the bitmap comprises $K$ consecutive bits corresponding to the $K$ RBGs in the frequency-domain resource indicator field in the first indication information.

72. The network device of claim 70 or 71, wherein the $K$ consecutive bits are the last $K$ bits in the frequency-domain resource indicator field or the first $K$ bits in the frequency-domain resource indicator field.

73. The network device of any of claims 70 to 72, wherein bits in the frequency-domain resource indicator field other than the $K$ bits indicate at least one of:

virtual cyclic redundancy check (CRC) enhanced downlink control information (DCI) detection-and-decoding information;
frequency-hopping offset information;
a symbol type; or
whether cross-subband scheduling is supported.

74. The network device of claim 69, wherein when the number of bits in the frequency-domain resource indicator field in the first indication information is less than $K$, the bitmap comprises $M$ bits corresponding to $M$ contiguous RBGs in the $K$ RBGs in the frequency-domain resource indicator field, wherein $M$ is the number of bits in the frequency-domain resource indicator field.

75. The network device of claim 74, wherein the $M$ contiguous RBGs are the first $M$ RBGs in the $K$ RBGs or the last $M$ RBGs in the $K$ RBGs.

76. The network device of any of claims 58 to 75, wherein the number of bits in the frequency-domain resource indicator field in the first indication information is determined based on the BWP bandwidth and/or the RBG configuration information.

77. A terminal device, comprising:

a memory configured to store computer programs; and
a processor configured to invoke and execute the computer programs stored in the memory, to cause the terminal device to perform the method of any of claims 1 to 19.

78. A network device, comprising:

a memory configured to store computer programs; and
a processor configured to invoke and execute the computer programs stored in the memory, to cause the network device to perform the method of any of claims 20 to 38.

79. A chip, comprising:
a processor configured to invoke and execute computer programs from a memory, to cause a device equipped with the chip to perform the method of any of claims 1 to 38.

80. A computer-readable storage medium, configured to store computer programs which, when executed by a device, are operable with the device to perform the method of any of claims 1 to 38.

81. A computer program product, comprising computer program instructions which are operable with a computer to perform the method of any of claims 1 to 38.

82. A computer program, operable with a computer to perform the method of any of claims 1 to 38.

83. A communication system, comprising:

a terminal device configured to perform the method of any of claims 1 to 19; and
a network device configured to perform the method of any of claims 20 to 38.

100

FIG. 1

FIG. 2

S301

RECEIVE, BY TERMINAL DEVICE, FIRST INDICATION INFORMATION, WHERE FIRST INDICATION INFORMATION INDICATES TARGET FREQUENCY-DOMAIN RESOURCE IN FIRST SUBBAND

S302

PARSE, BY TERMINAL DEVICE, FIRST INDICATION INFORMATION BASED ON FIRST RBG SIZE, TO DETERMINE TARGET FREQUENCY-DOMAIN RESOURCE

FIG. 3

S401

SEND, BY NETWORK DEVICE, FIRST INDICATION INFORMATION, WHERE FIRST INDICATION INFORMATION IS DETERMINED BASED ON FIRST RBG SIZE, AND FIRST INDICATION INFORMATION INDICATES TARGET FREQUENCY-DOMAIN RESOURCE IN FIRST SUBBAND

FIG. 4

TERMINAL DEVICE 500

FIRST COMMUNICATION
MODULE 510

FIRST PROCESSING
MODULE 520

FIG. 5

NETWORK DEVICE 600

SECOND COMMUNICATION
MODULE 610

FIG. 6

NETWORK DEVICE 600

SECOND COMMUNICATION
MODULE 610

SECOND PROCESSING
MODULE 710

FIG. 7

NETWORK DEVICE 600

SECOND COMMUNICATION
MODULE 610

THIRD PROCESSING
MODULE 810

FIG. 8

NETWORK DEVICE 600

SECOND COMMUNICATION
MODULE 610

FOURTH PROCESSING
MODULE 910

FIG. 9

FIG. 10

CHIP 1100

INPUT
INTERFACE
1130

PROCESSOR
1110

MEMORY
1120

OUTPUT
INTERFACE
1140

FIG. 11

COMMUNICATION SYSTEM 1200

TERMINAL
DEVICE

500

NETWORK
DEVICE

600

FIG. 12

## INTERNATIONAL SEARCH REPORT

| International application No. |
| --- |
| **PCT/CN2023/091760** |

| A. | CLASSIFICATION OF SUBJECT MATTER |
| --- | --- |

H04W 72/0453(2023.01)i;  H04W 72/12(2023.01)i

According to International Patent Classification (IPC) or to both national classification and IPC

| B. | FIELDS SEARCHED |
| --- | --- |

Minimum documentation searched (classification system followed by classification symbols)

IPC:H04W,H04L,H04B

Documentation searched other than minimum documentation to the extent that such documents are included in the fields searched

Electronic data base consulted during the international search (name of data base and, where practicable, search terms used)

3GPP, CJFD, CNTXT, DWPI, ENTXT, ENTXTC, VEN, WPABS, WPABSC: 频域资源, 指示, 资源块组, RBG, XDD, 下行, 上行, 子带, 配置, frequency resource, indicat+, Resource Block Group, downlink, uplink, config+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2023028259 A1 (SAMSUNG ELECTRONICS CO., LTD.) 26 January 2023 (2023-01-26) description, paragraphs [0104]-[0114], [0180]-[0189], and [0284]-[0402], and figures 12-21 | 1-83 |
| X | CN 116018865 A (SAMSUNG ELECTRONICS CO., LTD.) 25 April 2023 (2023-04-25) description, paragraphs [0274]-[0402] | 1-83 |
| A | WO 2023043683 A1 (INTERDIGITAL PATENT HOLDINGS, INC.) 23 March 2023 (2023-03-23) entire document | 1-83 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **07 December 2023** | **14 December 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/091760**

| Patent document cited in search report | | | Publication date (day/month/year) | Patent family member(s) | | | Publication date (day/month/year) |
|---|---|---|---|---|---|---|---|
| US | 2023028259 | A1 | 26 January 2023 | WO | 2023282572 | A1 | 12 January 2023 |
| | | | | KR | 20230007240 | A | 12 January 2023 |
| CN | 116018865 | A | 25 April 2023 | WO | 2022014833 | A1 | 20 January 2022 |
| | | | | KR | 20220008701 | A | 21 January 2022 |
| | | | | EP | 4171145 | A1 | 26 April 2023 |
| WO | 2023043683 | A1 | 23 March 2023 | TW | 202316830 | A | 16 April 2023 |

Form PCT/ISA/210 (patent family annex) (July 2022)